# FASCICULE DE BREVET EUROPEEN

(11) **EP 4 389 611 B1**
(45) Date de publication et mention de la délivrance du brevet: **26.11.2025**
(21) Numéro de dépôt: 23215124.1
(22) Date de dépôt: 08.12.2023
(51) Int. Cl.: B64D 41/00

(54) **PROCÉDÉ DE GESTION DE LA CONFIGURATION D'UN AÉRONEF ÉQUIPÉ OU NON D'AU MOINS UNE UNITÉ DE PUISSANCE AUXILIAIRE, AÉRONEF ET DISPOSITIF PERMETTANT LA MISE EN OEUVRE DUDIT PROCÉDÉ**
VERFAHREN ZUR VERWALTUNG DER KONFIGURATION EINES MIT ODER OHNE MINDESTENS EINER HILFSLEISTUNGSEINHEIT AUSGESTATTETEN FLUGZEUGS, FLUGZEUG UND VORRICHTUNG ZUR DURCHFÜHRUNG DES VERFAHRENS
METHOD FOR MANAGING THE CONFIGURATION OF AN AIRCRAFT EQUIPPED WITH AT LEAST ONE AUXILIARY POWER UNIT, AIRCRAFT AND DEVICE FOR IMPLEMENTING SAID METHOD

(30) Priorité: 19.12.2022 FR 2213817
(43) Date de publication de la demande: 26.06.2024
(73) Titulaire: AIRBUS OPERATIONS (S.A.S.), 31060 Toulouse (FR)
(72) Inventeur: DOUREL, Pierre, 31060 TOULOUSE (FR); CAZOR, Benoit, 31060 TOULOUSE (FR)
(74) Mandataire: Fantin, Laurent

(56) Documents cités:
- CN-A- 106 347 644
- DE-A1- 3 245 011
- US-A1- 2010 316 928
- US-A1- 2016 176 533

## Description

La présente demande se rapporte à un procédé de gestion de la configuration d'un aéronef équipé ou non d'au moins une unité de puissance auxiliaire ainsi qu'à un aéronef et à un dispositif permettant la mise en œuvre du procédé. Le document CN106347644A divulgue un procédé de gestion de la configuration d'un aéronef de l'art antérieure.

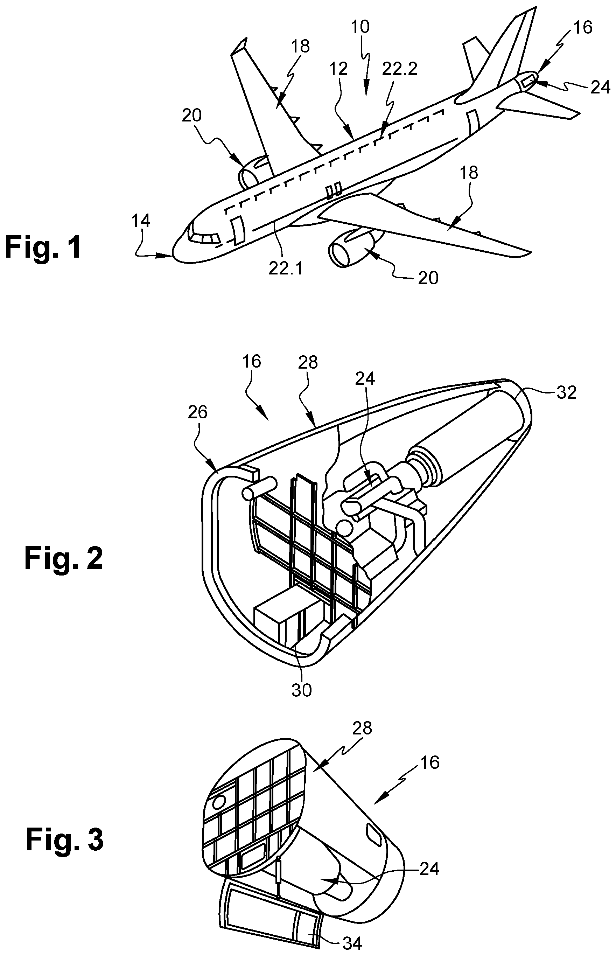

Selon un mode de réalisation illustré sur la figure 1, un aéronef 10 comprend un fuselage 12 qui s'étend entre une pointe avant 14 et un cône arrière 16, des ailes 18 qui s'étendent de part et d'autre du fuselage 12 ainsi que des unités de propulsion principales 20 reliées aux ailes 18. L'aéronef 10 comprend également au moins un réseau électrique 22.1 ainsi qu'au moins un réseau d'air conditionné 22.2. En vol, les unités de propulsion principales 20 génèrent l'énergie nécessaire au fonctionnement des réseaux électrique et d'air conditionné 22.1, 22.2.

Pour la suite de la description, une direction longitudinale est une direction parallèle à une droite passant approximativement par la pointe avant 14 et le cône arrière 16, parallèle au sol lorsque l'aéronef est au sol. Un plan transversal est perpendiculaire à la direction longitudinale.

L'aéronef 10 comprend une unité de puissance auxiliaire 24 dite APU (pour Auxiliary Power Unit en anglais) configurée pour démarrer les unités de propulsion principales 20 et générer l'énergie nécessaire aux réseaux électrique et d'air conditionné 22.1, 22.2 lorsque les unités de propulsion principales 20 sont à l'arrêt au sol. En présence d'une unité de puissance auxiliaire 24, l'aéronef 10 peut être exploité dans certaines conditions dites ETOPS (pour Extended-range Twin-engine Operation Performance Standards).

Selon une configuration visible sur les figures 2 et 3, l'unité de puissance auxiliaire 24 est positionnée dans le cône arrière 16. Ce dernier comprend une structure primaire 26 comportant plusieurs renforts transversaux, en forme de cadres, parallèles entre eux et positionnés dans des plans transversaux ainsi que des renforts longitudinaux reliant les renforts transversaux entre eux. Cette structure primaire est dimensionnée de manière à supporter l'unité de puissance auxiliaire 24. Le cône arrière 16 comprend également une structure secondaire 28, sous la forme d'un carénage, rapportée sur la structure primaire 26 ainsi que des équipements assurant le bon fonctionnement de l'unité de puissance auxiliaire 24. A titre d'exemple, ces équipements comprennent au moins une entrée d'air 30, au moins une canalisation pour acheminer de l'air de l'entrée d'air 30 vers l'unité de puissance auxiliaire 24, un orifice d'échappement 32 pour évacuer les gaz générés par l'unité de puissance auxiliaire 24 ainsi qu'au moins une trappe 34, mobile entre une position fermée et une position ouverte (visible sur la figure 3), dimensionnée pour permettre le passage de l'unité de puissance auxiliaire 24 lors d'une opération de maintenance.

Pour donner un ordre de grandeur, l'unité de puissance auxiliaire 24, ses équipements ainsi que la structure primaire 26 du cône arrière 16 ont une masse de l'ordre de 400 kg pour un aéronef de type monocouloir.

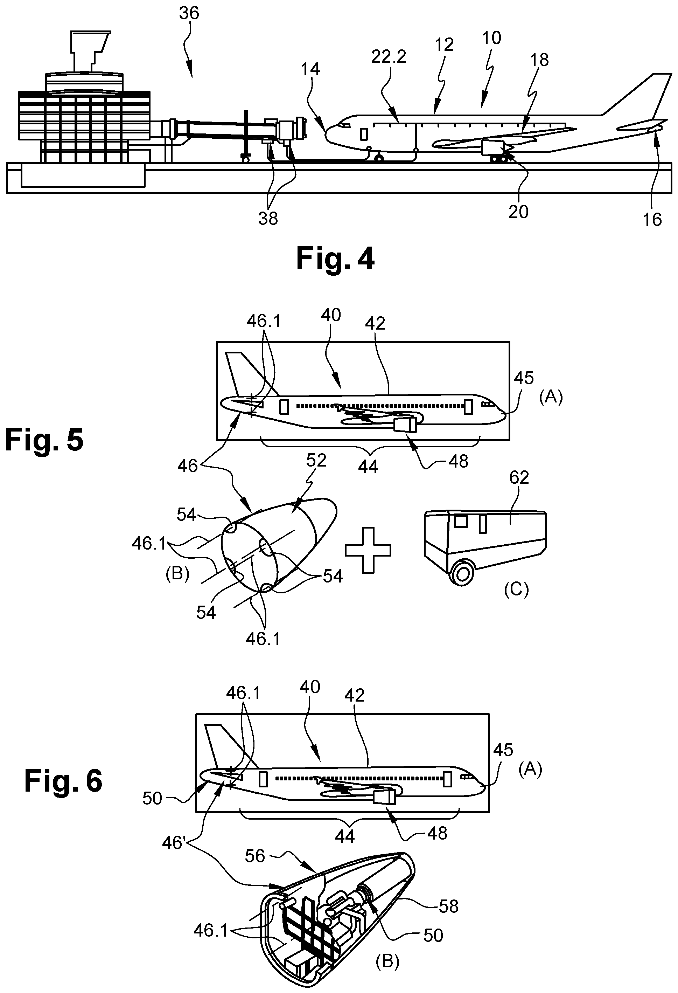

Comme illustré sur la figure 4, certains aéroports 36 comprennent des unités de puissance au sol 38 dites GPU (pour Ground Power Unit en anglais) configurées pour alimenter en énergie l'aéronef au sol, notamment les réseaux électrique et d'air conditionné 22.1, 22.2 de l'aéronef 10 ainsi que les unités de propulsion principales 20 lors de leur démarrage. Dans de tels aéroports 36, l'unité de puissance auxiliaire 24 de l'aéronef 10 n'est pas utilisée.

Dans la mesure où tous les aéroports ne sont pas équipés d'unités de puissance au sol 38 et que les aéronefs peuvent réaliser durant leur exploitation des vols dans des conditions ETOPS, les aéronefs sont commercialisés équipés d'une unité de puissance auxiliaire 24, ce qui conduit à augmenter la masse de l'aéronef 10 et donc sa consommation énergétique même si cette unité de puissance auxiliaire 24 n'est pas toujours nécessaire.

Le document US2016/176533 décrit un aéronef équipé d'une unité de puissance auxiliaire dite APU amovible.

La présente invention vise à remédier à tout ou partie des inconvénients de l'art antérieur.

A cet effet, l'invention a pour objet un procédé de gestion d'au moins un aéronef, ledit aéronef comportant un fuselage qui présente une partie principale et étant configuré pour réaliser une première catégorie de vols ne nécessitant pas d'unité de puissance auxiliaire et une deuxième catégorie de vols nécessitant au moins une unité de puissance auxiliaire.

Selon l'invention, l'aéronef est configuré pour occuper alternativement une première configuration adaptée à la première catégorie de vols dans laquelle l'aéronef comprend un premier cône arrière allégé, ne comportant pas d'unité de puissance auxiliaire, positionné à l'arrière de la partie principale et relié à cette dernière par une liaison arrière démontable et une deuxième configuration adaptée à la deuxième catégorie de vols dans laquelle l'aéronef comprend un deuxième cône arrière comportant une unité de puissance auxiliaire, positionné à l'arrière de la partie principale et relié à cette dernière par la liaison arrière démontable. En complément, le procédé de gestion comprend, pour au moins un vol donné à réaliser, une étape de détermination parmi les première et deuxième catégories de vols à laquelle appartient le vol donné à réaliser, une étape de détermination parmi les première et deuxième configurations laquelle est adaptée à la catégorie de vols déterminée à l'étape précédente ainsi qu'une étape de changement de la configuration de l'aéronef si la configuration de l'aéronef ne correspond pas à la configuration déterminée à l'étape précédente.

Ce procédé de gestion permet de ne prévoir une unité de puissance auxiliaire embarquée dans l'aéronef que si la catégorie du vol à réaliser par l'aéronef le nécessite. Ainsi, quand la catégorie du vol à réaliser par l'aéronef ne le nécessite pas, l'unité de puissance auxiliaire peut être retirée, ce qui conduit à réduire la masse embarquée et donc la consommation énergétique de l'aéronef.

Selon une autre caractéristique, le procédé de gestion comprend une étape de planification des vols à réaliser par l'aéronef, une étape de détermination de la catégorie de vols à laquelle appartient chaque vol et de la configuration de l'aéronef pour chaque vol, une étape de détermination de chaque escale prévue entre deux vols successifs présentant des configurations d'aéronef différentes ainsi qu'une étape de planification d'une étape de changement de configuration de l'aéronef pour chaque escale déterminée à l'étape précédente.

L'invention a également pour objet un aéronef permettant la mise en œuvre du procédé de gestion selon la caractéristique précédente. Selon l'invention, l'aéronef comprend alternativement des premier et deuxième cônes arrière positionnés à l'arrière de la partie principale du fuselage ainsi qu'une liaison arrière démontable reliant le premier ou deuxième cône arrière et la partie principale du fuselage, le premier cône arrière étant allégé et ne comportant pas d'unité de puissance auxiliaire, le deuxième cône arrière comportant une unité de puissance auxiliaire.

L'invention a également pour objet un procédé de gestion d'au moins une flotte d'aéronefs. Selon l'invention, le procédé de gestion comprend une étape de détermination des vols à réaliser par chacun des aéronefs de la flotte d'aéronefs, une étape de détermination de la catégorie de vols à laquelle appartient chaque vol et de la configuration de l'aéronef pour chaque vol déterminé à l'étape précédente, une étape de détermination, pour chaque aéronef de la flotte d'aéronefs, des escales lors desquelles l'aéronef est soumis à une étape de changement de configuration visant à retirer ou mettre en place un premier cône arrière allégé, ne comportant pas d'unité de puissance auxiliaire, ou un deuxième cône arrière comportant une unité de puissance auxiliaire ainsi qu'une étape de planification des étapes de changement de configuration des aéronefs de la flotte d'aéronefs pour chaque escale déterminée à l'étape précédente.

Selon une autre caractéristique, au moins un premier cône arrière est compatible avec plusieurs aéronefs et/ou au moins un deuxième cône arrière est compatible avec plusieurs aéronefs.

Selon une autre caractéristique, l'étape de planification consiste à prévoir, pour chaque étape de changement de configuration, le lieu et la date de l'étape de changement de configuration, le premier ou deuxième cône arrière à remonter compatible avec l'aéronef à transformer ainsi que les moyens matériels et humains nécessaires à l'étape de changement de configuration. L'invention a également pour objet un dispositif de gestion d'au moins une flotte d'aéronefs permettant la mise en œuvre du procédé de gestion d'au moins une flotte d'aéronefs. Selon l'invention, le dispositif de gestion comprend au moins une première base de données répertoriant les vols à réaliser par les aéronefs de la flotte d'aéronefs, au moins une deuxième base de données répertoriant les aéroports de départ et d'arrivée des vols des aéronefs de la flotte d'aéronefs ainsi qu'au moins un gestionnaire configuré pour déterminer, à partir des première et deuxième bases de données, au moins une planification des étapes de changement de configuration des aéronefs de la flotte d'aéronefs.

Selon une autre caractéristique, la première base de données répertorie, pour chaque vol, au moins les caractéristiques suivantes : un aéroport de départ, une date de départ, un aéroport d'arrivée, une date d'arrivée ainsi que des conditions d'exploitation du vol.

Selon une autre caractéristique, la deuxième base de données répertorie, pour chaque aéroport, si les aéronefs doivent être équipés ou non d'une unité de puissance auxiliaire.

Selon une autre caractéristique, le dispositif de gestion comprend au moins un opérateur configuré pour réaliser les étapes de changement de configuration à partir de la planification établie par le gestionnaire.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef équipé d'une unité de puissance auxiliaire illustrant un mode de réalisation,
- La figure 2 est une vue en perspective de l'intérieur d'une partie d'un cône arrière d'un aéronef comportant une unité de puissance auxiliaire illustrant un mode de réalisation,
- La figure 3 est une vue en perspective d'un cône arrière d'un aéronef comportant une trappe ouverte illustrant un mode de réalisation,
- La figure 4 est une vue latérale d'un aéronef et d'un aéroport équipé d'unités de puissance au sol illustrant un mode de réalisation,
- La figure 5 est une vue latérale d'un aéronef (A) équipé d'un premier cône arrière allégé (B), configuré pour être alimenté par une unité de puissance au sol (C), illustrant un mode de réalisation de l'invention,
- La figure 6 est une vue latérale d'un aéronef (A) équipé d'un deuxième cône arrière, intégrant une unité de puissance auxiliaire (B), illustrant un mode de réalisation de l'invention,
- La figure 7 est une représentation schématique d'un procédé de gestion d'un aéronef illustrant un mode de réalisation de l'invention,
- La figure 8 est une représentation schématique d'un procédé de gestion d'une flotte d'aéronefs illustrant un mode de réalisation de l'invention.

Comme illustré sur les figures 5 à 8, un aéronef 40 comprend un fuselage 42 qui présente une partie principale 44, une pointe avant 45 positionnée à l'avant de la partie principale 44 et reliée à cette dernière par une liaison avant permanente ainsi qu'un cône arrière 46 positionné à l'arrière de la partie principale 44 et relié à cette dernière par une liaison arrière 46.1. L'aéronef comprend également des unités de propulsion principales 48, au moins un réseau électrique ainsi qu'au moins un réseau d'air conditionné. Les unités de propulsion principales 48 sont configurées pour générer l'énergie nécessaire au fonctionnement des réseaux électrique et d'air conditionné. Tous ces éléments ne sont pas plus détaillés car ils peuvent être identiques à ceux de l'art antérieur.

L'aéronef 40 est configuré pour occuper alternativement une première configuration, visible sur la figure 5, dans laquelle l'aéronef ne comprend pas d'unité de puissance auxiliaire ainsi qu'une deuxième configuration, visible sur la figure 6, dans laquelle l'aéronef comprend au moins une unité de puissance auxiliaire 50. Dans la première configuration, l'aéronef 40 ne peut réaliser que des missions d'un premier type, comme des missions réalisées dans des conditions dites non ETOPS. Dans la deuxième configuration, l'aéronef 40 peut réaliser des missions d'un deuxième type, comme des missions réalisées dans des conditions dites ETOPS. Dans la première configuration, l'aéronef 40 comprend un premier cône arrière 46 relié par une liaison arrière 46.1 démontable à la partie principale 44 du fuselage 42. Ce premier cône arrière 46 est allégé et creux. Il comprend un carénage 52 ainsi qu'au moins une platine 54 configurée pour être reliée à la partie principale 44 du fuselage par la liaison arrière 46.1 démontable.

Ce premier cône arrière 46 ne comprend pas d'unité de puissance auxiliaire. Il ne comprend ni équipement destiné à une unité de puissance auxiliaire ni structure principale configurée pour supporter la masse d'une unité de puissance auxiliaire.

Dans la deuxième configuration, l'aéronef comprend un deuxième cône arrière 46' relié par la liaison arrière 46.1 démontable à la partie principale 44 du fuselage 42. Selon un mode de réalisation, le deuxième cône arrière 46' comprend une structure primaire 56 comportant plusieurs renforts transversaux en forme de cadre, parallèles entre eux et positionnés dans des plans transversaux ainsi que des renforts longitudinaux reliant les renforts transversaux entre eux. Cette structure primaire 56 est dimensionnée de manière à supporter l'unité de puissance auxiliaire 50. Le deuxième cône arrière 46' comprend également une structure secondaire 58, sous la forme d'un carénage, rapportée sur la structure primaire 56 ainsi que des équipements assurant le bon fonctionnement de l'unité de puissance auxiliaire 50.

L'unité de puissance auxiliaire 50 intégrée dans le deuxième cône arrière 46' est reliée à chacun des réseaux électrique et d'air conditionné de l'aéronef par un système de raccordement démontable.

Le deuxième cône arrière 46' n'est pas plus détaillé car il peut être identique à ceux de l'art antérieur montés sur les aéronefs exploités dans les conditions dites ETOPS.

Selon une forme de réalisation, le premier cône arrière 46 présente une masse nettement inférieure à celle du deuxième cône arrière 46', représentant environ 1/3 de la masse du deuxième cône arrière 46'. De plus, le premier cône arrière 46 allégé ne nécessite quasiment pas d'entretien.

Selon un mode de réalisation, la liaison arrière 46.1 comprend plusieurs éléments de liaison, répartis sur la circonférence du fuselage, sous la forme de boulons par exemple. Ainsi, les premier et deuxième cônes arrière 46, 46' peuvent être rapidement séparés de la partie principale 44 du fuselage et intervertis.

Pour faciliter la manipulation des premier et deuxième cônes arrière 46, 46', chacun d'eux comprend au moins un crochet ou/et au moins un point de levage permettant de le manutentionner lors de sa mise en place ou de son retrait. Généralement, chacun des premier et deuxième cônes arrière 46, 46' comprend plusieurs crochets et/ou plusieurs points de levage pour permettre de le soulever avec un système de levage à élingues.

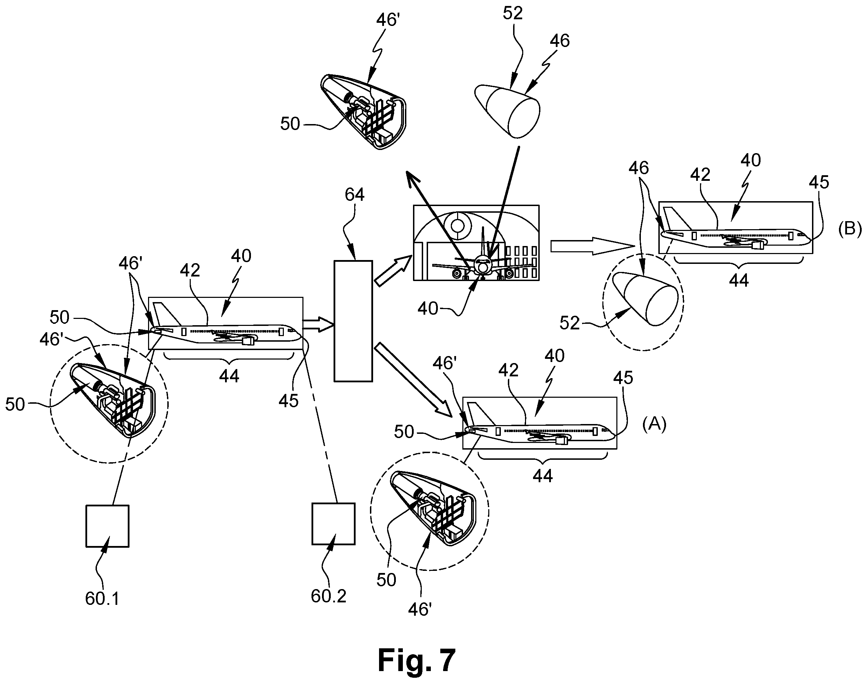

Lors de son exploitation, chaque vol réalisé par l'aéronef 40 se caractérise par un aéroport de départ 60.1, un aéroport d'arrivée 60.2 (visible sur la figure 7) ainsi que des conditions d'exploitation ETOPS ou non ETOPS.

En fonction de son niveau d'équipement, un aéroport de départ ou d'arrivée 60.1, 60.2 peut comprendre au moins une unité de puissance au sol 62, visible sur la figure 5. Ainsi, dans certains aéroports de départ ou d'arrivée 60.1, 60.2, la présence d'unités de puissance auxiliaire 50 n'est pas nécessaire.

Par conséquent, l'aéronef 40 est configuré pour réaliser une première catégorie de vols ne nécessitant pas d'unité de puissance auxiliaire 50 ainsi qu'une deuxième catégorie de vols nécessitant une unité de puissance auxiliaire 50.

Les vols de la première catégorie sont ceux opérés dans des conditions d'exploitation non ETOPS pour lesquels les aéroports de départ 60.1 et d'arrivée 60.2 permettent d'alimenter en énergie l'aéronef au sol.

Les vols de la deuxième catégorie sont ceux opérés dans les conditions d'exploitation ETOPS ou pour lesquels au moins un aéroport parmi les aéroports de départ et d'arrivée 60.1, 60.2 ne permet pas d'alimenter en énergie l'aéronef 40 au sol.

Pour un aéronef 40 configuré pour occuper alternativement une première configuration dans laquelle l'aéronef ne comprend pas d'unité de puissance auxiliaire 50 et présente un premier cône arrière 46 allégé ainsi qu'une deuxième configuration dans laquelle l'aéronef comprend une unité de puissance auxiliaire 50 positionnée dans un deuxième cône arrière 46', un procédé de gestion de l'aéronef 40 comprend, pour au moins un vol donné à réaliser, une étape de détermination parmi les première et deuxième catégories de vols à laquelle appartient le vol donné, une étape de détermination parmi les première et deuxième configurations laquelle est adaptée à la catégorie de vols déterminée à l'étape précédente ainsi qu'une étape de changement de configuration si la configuration de l'aéronef ne correspond pas à la configuration déterminée à l'étape précédente.

Selon un exemple illustré sur la figure 7, l'aéronef 40 est configuré selon la deuxième configuration et comprend un deuxième cône arrière 46' comportant une unité de puissance auxiliaire 50. Préalablement à un nouveau vol, le procédé de gestion de l'aéronef 40 comprend une étape de détermination de la catégorie de vols 64 à laquelle appartient le nouveau vol. Si ce dernier appartient à la deuxième catégorie, l'aéronef reste dans la même configuration, comme illustré sur la partie (A) de la figure 7. Si le nouveau vol appartient à la première catégorie de vols alors l'aéronef 40 subit une étape de changement de configuration, le deuxième cône arrière 46' intégrant l'unité de puissance auxiliaire 50 étant retiré et remplacé par un premier cône arrière 46 allégé, comme illustré sur la partie (B) de la figure 7.

Selon le procédé de gestion, si deux vols successifs appartiennent à la même catégorie de vols alors l'aéronef reste inchangé. Si deux vols successifs appartiennent à des catégories de vols différentes alors l'aéronef 40 est soumis à une étape de changement de configuration, entre les deux vols successifs, lors de laquelle les premier et deuxième cônes arrière 46, 46' sont intervertis.

Le procédé de gestion permet d'optimiser la masse de l'aéronef en fonction de la catégorie du vol à réaliser. Ainsi, si l'unité de puissance auxiliaire 50 n'est pas nécessaire, l'aéronef 40 comprend un premier cône arrière 46 allégé, ce qui se traduit par une réduction importante de la masse de l'aéronef. Si les conditions rendent l'utilisation d'une unité de puissance auxiliaire 50 nécessaire alors l'aéronef 40 comprend un deuxième cône arrière 46' incorporant une unité de puissance auxiliaire 50. Ainsi, contrairement à l'art antérieur, l'aéronef 40 n'est pas configuré de la même manière durant toute sa vie d'exploitation. Sa configuration est adaptée aux conditions d'utilisation.

Selon un mode opératoire, le procédé de gestion de l'aéronef 40 comprend une étape de planification des vols à réaliser par l'aéronef 40, une étape de détermination de la catégorie de vols à laquelle appartient chaque vol et de la configuration de l'aéronef 40 pour chaque vol, une étape de détermination de chaque escale prévue entre deux vols successifs présentant des configurations d'aéronef différentes ainsi qu'une étape de planification d'une étape de changement de configuration pour chaque escale déterminée à l'étape précédente. Ainsi, il est possible d'anticiper les étapes de changement de configuration de l'aéronef et de prévoir, pour chaque escale nécessitant un changement de configuration, les moyens matériels et humains nécessaires pour ce changement de configuration.

Ce procédé de gestion peut s'appliquer à plusieurs aéronefs, comme une flotte d'aéronefs appartenant à une ou plusieurs compagnie(s) aérienne(s) et/ou à un ou plusieurs opérateur(s) utilisant des aéronefs.

Selon une autre particularité, au moins un premier cône arrière 46 est compatible avec plusieurs aéronefs et peut être rapporté successivement sur différents aéronefs, comme les aéronefs d'une même famille d'aéronefs par exemple. En parallèle, au moins un deuxième cône arrière 46' est compatible avec plusieurs aéronefs et peut être rapporté successivement sur différents aéronefs, comme les aéronefs d'une même famille d'aéronefs par exemple. Ainsi, sur un aéroport de départ ou d'arrivée 60.1, 60.2, un premier cône arrière 46 d'un premier aéronef peut être déposé et remonté sur un deuxième aéronef.

Selon une autre caractéristique, les premiers et deuxièmes cônes arrière 46, 46' sont répartis en plusieurs familles de cônes arrière, les premiers ou deuxièmes cônes arrière 46, 46' d'une même famille de cônes arrière étant interchangeables et pouvant se monter sur différents aéronefs d'une même famille d'aéronefs.

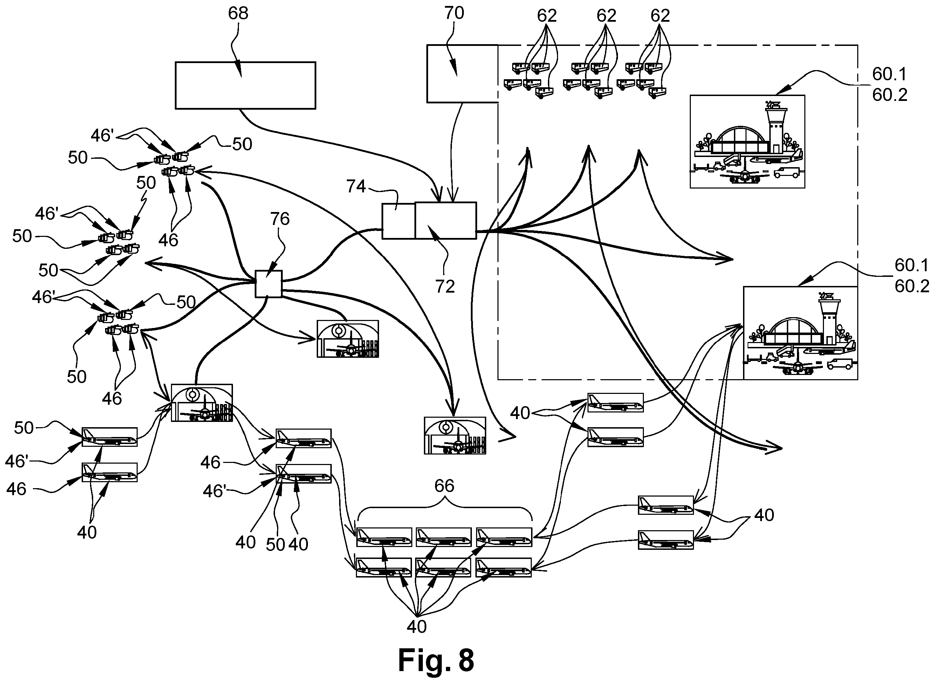

Selon un mode opératoire illustré sur la figure 8, un procédé de gestion d'au moins une flotte d'aéronefs 66 comprend une étape de détermination des vols à réaliser par chacun des aéronefs 40 de la flotte d'aéronefs 66, une étape de détermination de la catégorie de vols à laquelle appartient chaque vol et de la configuration de l'aéronef 40 pour chaque vol déterminé à l'étape précédente, une étape de détermination, pour chaque aéronef 40 de la flotte d'aéronefs 66, des escales lors desquelles l'aéronef 40 est soumis à une étape de changement de configuration visant à retirer ou mettre en place une unité de puissance auxiliaire 50 ainsi qu'une étape de planification des étapes de changement de configuration des aéronefs de la flotte d'aéronefs 66 pour chaque escale déterminée à l'étape précédente.

Cette étape de planification consiste à prévoir, pour chaque étape de changement de configuration, le lieu et la date de l'étape de changement de configuration, le premier ou deuxième cône arrière 46, 46' à remonter compatible avec l'aéronef à transformer ainsi que les moyens matériels et humains nécessaires à l'étape de changement de configuration.

Comme illustré sur la figure 8, un dispositif permettant la mise en œuvre du procédé de gestion d'au moins une flotte d'aéronefs 66 comprend au moins une première base de données 68 répertoriant tous les vols à réaliser par les aéronefs 40 de la flotte d'aéronefs 66, au moins une deuxième base de données 70 répertoriant les aéroports de départ et d'arrivée des vols des aéronefs 40 de la flotte d'aéronefs 66 ainsi qu'au moins un gestionnaire 72 configuré pour déterminer, à partir des première et deuxième bases de données 68, 70, au moins une planification 74 des étapes de changement de configuration des aéronefs 40 de la flotte d'aéronefs.

La première base de données 68 relative aux vols répertorie, pour chaque vol, au moins les caractéristiques suivantes : un aéroport de départ, une date de départ, un aéroport d'arrivée, une date d'arrivée ainsi que des conditions d'exploitation du vol ETOPS ou non ETOPS.

La deuxième base de données 70 relative aux aéroports répertorie, pour chaque aéroport 60.1, 60.2, si les aéronefs 40 doivent être équipés ou non d'une unité de puissance auxiliaire 50.

Les première et deuxième bases 68 et 70 pourraient être regroupées dans une même et unique base de données.

A partir de la deuxième base de données 70, le gestionnaire 72 détermine, pour chaque vol répertorié dans la première base de données 68, s'il appartient à la première ou deuxième catégorie puis la configuration de l'aéronef 40 réalisant le vol.

Connaissant la configuration de l'aéronef 40 de chaque vol, le gestionnaire 72 peut déterminer la planification 74 des étapes de changement de configuration des aéronefs 40 de la flotte d'aéronefs 66. Pour chaque étape de changement de configuration planifiée, le gestionnaire 72 détermine la date et le lieu de l'étape de changement de configuration, les moyens humains et matériels nécessaires pour réaliser l'étape de changement de configuration ainsi que le premier ou deuxième cône arrière 46, 46' à mettre en place lors de l'étape de changement de configuration à la place de celui présent sur l'aéronef.

Le dispositif de gestion d'au moins une flotte d'aéronefs 66 comprend au moins un opérateur 76 configuré pour réaliser les étapes de changement de configuration à partir de la planification 74 établie par le gestionnaire 72. Connaissant, pour chaque étape de changement de configuration, la date et le lieu de l'étape de changement de configuration, les moyens humains et matériels nécessaires pour réaliser l'étape de changement de configuration ainsi que le premier ou deuxième cône arrière 46, 46' à mettre en place lors de l'étape de changement de configuration, l'opérateur 76 peut modifier l'aéronef de manière sûre et rapide, tout en limitant les risques d'impact sur la planification des vols.

Bien entendu, le procédé de gestion d'une flotte d'aéronefs n'est pas limité aux aéronefs disposant d'une unité de puissance auxiliaire 50 positionnée dans le cône arrière 46'. Ainsi, ce procédé peut s'appliquer aux aéronefs disposant chacun d'une unité de puissance auxiliaire 50 démontable quelle que soit sa position dans l'aéronef. Pour ce type d'aéronef, le gestionnaire 72 détermine, pour chaque étape de changement de configuration planifiée, la date et le lieu de l'étape de changement de configuration, les moyens humains et matériels nécessaires pour réaliser l'étape de changement de configuration, l'unité de puissance auxiliaire à mettre en place ou à retirer lors de l'étape de changement de configuration ainsi qu'éventuellement un mode opératoire pour mettre en place ou retirer l'unité de puissance auxiliaire 50.

Ce procédé de gestion d'une flotte d'aéronefs permet de ne prévoir une unité de puissance auxiliaire embarquée dans un aéronef que si la catégorie du vol à réaliser par l'aéronef le nécessite. Ainsi, quand la catégorie du vol à réaliser par l'aéronef ne le nécessite pas, l'unité de puissance auxiliaire 50 peut être retirée, ce qui conduit à réduire la masse embarquée et donc la consommation énergétique de l'aéronef ou d'augmenter la masse transportée utile. Lorsque l'unité de puissance auxiliaire 50 est positionnée dans le cône arrière de l'aéronef, le fait d'interchanger les premier et deuxième cônes arrière permet d'augmenter le gain de masse et de simplifier l'étape de changement de configuration.

## Revendications

1. Procédé de gestion d'au moins un aéronef (40), ledit aéronef (40) comportant un fuselage (42) qui présente une partie principale (44) et étant configuré pour réaliser une première catégorie de vols ne nécessitant pas d'unité de puissance auxiliaire (50) et une deuxième catégorie de vols nécessitant au moins une unité de puissance auxiliaire (50), **caractérisé en ce que** l'aéronef (40) est configuré pour occuper alternativement une première configuration adaptée à la première catégorie de vols dans laquelle l'aéronef (40) comprend un premier cône arrière (46) allégé, ne comportant pas d'unité de puissance auxiliaire (50), positionné à l'arrière de la partie principale (44) et relié à cette dernière par une liaison arrière (46.1) démontable et une deuxième configuration adaptée à la deuxième catégorie de vols dans laquelle l'aéronef (40) comprend un deuxième cône arrière (46') comportant une unité de puissance auxiliaire (50), positionné à l'arrière de la partie principale (44) et relié à cette dernière par la liaison arrière (46.1) démontable et **en ce que** le procédé de gestion comprend, pour au moins un vol donné à réaliser, une étape de détermination parmi les première et deuxième catégories de vols à laquelle appartient le vol donné à réaliser, une étape de détermination parmi les première et deuxième configurations laquelle est adaptée à la catégorie de vols déterminée à l'étape précédente ainsi qu'une étape de changement de configuration de l'aéronef si la configuration de l'aéronef ne correspond pas à la configuration déterminée à l'étape précédente.

2. Procédé de gestion d'au moins un aéronef (40) selon la revendication précédente, **caractérisé en ce que** le procédé de gestion comprend une étape de planification des vols à réaliser par l'aéronef (40), une étape de détermination de la catégorie de vols à laquelle appartient chaque vol et de la configuration de l'aéronef (40) pour chaque vol, une étape de détermination de chaque escale prévue entre deux vols successifs présentant des configurations d'aéronef différentes ainsi qu'une étape de planification d'une étape de changement de configuration de l'aéronef pour chaque escale déterminée à l'étape précédente.

3. Procédé de gestion d'au moins une flotte d'aéronefs (66) selon l'une des revendications 1 à 2, **caractérisé en ce que** le procédé de gestion comprend une étape de détermination des vols à réaliser par chacun des aéronefs (40) de la flotte d'aéronefs (66), une étape de détermination de la catégorie de vols à laquelle appartient chaque vol et de la configuration de l'aéronef (40) pour chaque vol déterminé à l'étape précédente, une étape de détermination, pour chaque aéronef (40) de la flotte d'aéronefs (66), des escales lors desquelles l'aéronef (40) est soumis à une étape de changement de configuration visant à retirer ou mettre en place un premier cône arrière (46) allégé, ne comportant pas d'unité de puissance auxiliaire (50), ou un deuxième cône arrière (46') comportant une unité de puissance auxiliaire (50) ainsi qu'une étape de planification des étapes de changement de configuration des aéronefs (40) de la flotte d'aéronefs (66) pour chaque escale déterminée à l'étape précédente.

4. Procédé de gestion d'au moins une flotte d'aéronefs selon la revendication précédente, **caractérisé en ce qu'**au moins un premier cône arrière (46) est compatible avec plusieurs aéronefs et/ou **en ce qu'**au moins un deuxième cône arrière (46') est compatible avec plusieurs aéronefs.

5. Procédé de gestion d'au moins une flotte selon la revendication précédente, **caractérisé en ce que** l'étape de planification consiste à prévoir, pour chaque étape de changement de configuration, le lieu et la date de l'étape de changement de configuration, le premier ou deuxième cône arrière (46, 46') à remonter compatible avec l'aéronef à transformer ainsi que les moyens matériels et humains nécessaires à l'étape de changement de configuration.

6. Dispositif de gestion d'au moins une flotte d'aéronefs (66) permettant la mise en œuvre du procédé de gestion d'au moins une flotte d'aéronefs (66) selon l'une des revendications 3 à 5, **caractérisé en ce que** le dispositif de gestion comprend au moins une première base de données (68) répertoriant les vols à réaliser par les aéronefs (40) de la flotte d'aéronefs (66), au moins une deuxième base de données (70) répertoriant les aéroports de départ et d'arrivée des vols des aéronefs (40) de la flotte d'aéronefs (66) ainsi qu'au moins un gestionnaire (72) configuré pour déterminer, à partir des première et deuxième bases de données (68, 70), au moins une planification (74) des étapes de changement de configuration des aéronefs (40) selon l'une des revendications 3 à 5 de la flotte d'aéronefs.

7. Dispositif de gestion d'au moins une flotte d'aéronefs (66) selon la revendication précédente, **caractérisé en ce que** la première base de données (68) répertorie, pour chaque vol, au moins les caractéristiques suivantes : un aéroport de départ, une date de départ, un aéroport d'arrivée, une date d'arrivée ainsi que des conditions d'exploitation du vol.

8. Dispositif de gestion d'au moins une flotte d'aéronef (66) selon l'une des revendications 6 à 7, **caractérisé en ce que** la deuxième base de données (70) répertorie, pour chaque aéroport (60.1, 60.2), si les aéronefs (40) doivent être équipés ou non d'une unité de puissance auxiliaire (50).

9. Dispositif de gestion d'au moins une flotte d'aéronef (66) selon l'une des revendications 6 à 8, **caractérisé en ce que** le dispositif de gestion comprend au moins un opérateur (76) configuré pour réaliser les étapes de changement de configuration à partir de la planification (74) établie par le gestionnaire (72).

## Patentansprüche

1. Verwaltungsverfahren wenigstens eines Luftfahrzeugs (40), wobei das Luftfahrzeug (40) einen Rumpf (42) mit einem Hauptteil (44) aufweist und so eingerichtet ist, dass es eine erste Kategorie von Flügen, die keine Hilfsenergieeinheit (50) erfordern, und eine zweite Kategorie von Flügen, die wenigstens eine Hilfsenergieeinheit (50) erfordern, durchführen kann, **dadurch gekennzeichnet, dass** das Luftfahrzeug (40) so eingerichtet ist, dass es abwechselnd eine erste Konfiguration einnimmt, die an die erste Kategorie von Flügen angepasst ist, in der das Luftfahrzeug (40) einen ersten leichten Heckkonus (46) umfasst, der keine Hilfsenergieeinheit (50) aufweist, der hinter dem Hauptteil (44) angeordnet und mit diesem durch eine trennbare Heckverbindung (46.1) verbunden ist, und eine zweite Konfiguration, die für die zweite Kategorie von Flügen geeignet ist, bei der das Luftfahrzeug (40) einen zweiten Heckkonus (46') mit einer Hilfsenergieeinheit (50) umfasst, der hinter dem Hauptteil (44) angeordnet und mit diesem durch die trennbare Heckverbindung (46.1) verbunden ist, und dass das Verwaltungsverfahren für wenigstens einen gegebenen durchzuführenden Flug einen Schritt der Bestimmung der ersten oder zweiten Flugkategorie aufweist, zu welcher der gegebene durchzuführende Flug gehört, einen Schritt der Bestimmung der ersten oder zweiten Konfiguration, welche an die im vorherigen Schritt bestimmte Flugkategorie angepasst ist, sowie einen Schritt der Änderung der Konfiguration des Luftfahrzeugs, wenn die Konfiguration des Luftfahrzeugs nicht der im vorherigen Schritt bestimmten Konfiguration entspricht.

2. Verwaltungsverfahren wenigstens eines Luftfahrzeugs (40) nach dem vorhergehenden Anspruch, **dadurch gekennzeichnet, dass** das Verwaltungsverfahren einen Schritt zur Planung der von dem Luftfahrzeug (40) durchzuführenden Flüge aufweist, einen Schritt zur Bestimmung der Flugkategorie, zu der jeder Flug gehört, und der Konfiguration des Luftfahrzeugs (40) für jeden Flug, einen Schritt zur Bestimmung jedes geplanten Zwischenstopps zwischen zwei aufeinanderfolgenden Flügen, die unterschiedliche Luftfahrzeugkonfigurationen aufweisen, sowie einen Schritt zur Planung eines Schritts zur Änderung der Konfiguration des Luftfahrzeugs für jeden im vorherigen Schritt bestimmten Zwischenstopp.

3. Verwaltungsverfahren wenigstens einer Flotte von Luftfahrzeugen (66) nach einem der Ansprüche 1 bis 2, **dadurch gekennzeichnet, dass** das Verwaltungsverfahren einen Schritt zur Bestimmung der Flüge aufweist, die von jedem der Luftfahrzeuge (40) der Flotte von Luftfahrzeugen (66) durchgeführt werden sollen, einen Schritt zur Bestimmung der Flugkategorie, zu der jeder Flug gehört, und der Konfiguration des Luftfahrzeugs (40) für jeden im vorherigen Schritt bestimmten Flug, einen Schritt zur Bestimmung der Zwischenlandungen für jedes Luftfahrzeug (40) der Flotte von Luftfahrzeugen (66), bei denen das Luftfahrzeug (40) einem Schritt zur Änderung der Konfiguration unterzogen wird, der darauf abzielt, einen ersten leichteren Heckkonus (46), der keine Hilfsenergieeinheit (50) aufweist, oder einen zweiten Heckkonus (46'), der eine Hilfsenergieeinheit (50) aufweist, zu entfernen oder anzubringen, sowie einen Schritt zur Planung der Schritte zur Änderung der Konfiguration der Luftfahrzeuge (40) der Luftfahrzeugflotte (66) für jede im vorherigen Schritt bestimmte Zwischenlandung.

4. Verwaltungsverfahren wenigstens einer Flotte von Luftfahrzeugen nach dem vorhergehenden Anspruch, **dadurch gekennzeichnet, dass** wenigstens ein erster Heckkonus (46) mit mehreren Luftfahrzeugen kompatibel ist und/oder dass wenigstens ein zweiter Heckkonus (46') mit mehreren Luftfahrzeugen kompatibel ist.

5. Verwaltungsverfahren wenigstens einer Flotte nach dem vorhergehenden Anspruch, **dadurch gekennzeichnet, dass** der Schritt zur Planung darin besteht, für jeden Schritt zur Änderung der Konfiguration den Ort und das Datum des Schritts zur Änderung der Konfiguration , den ersten oder zweiten Heckkonus (46, 46'), der angebracht werden muss und der mit dem umzuwandelnden Luftfahrzeug kompatibel ist, sowie die für den Schritt zur Änderung der Konfiguration erforderlichen materiellen und menschlichen Mittel vorzusehen.

6. Verwaltungsvorrichtung wenigstens einer Flotte von Luftfahrzeugen (66), die die Durchführung des Verwaltungsverfahrens wenigstens einer Flotte von Luftfahrzeugen (66) nach einem der Ansprüche 3 bis 5 ermöglicht, **dadurch gekennzeichnet, dass** die Verwaltungsvorrichtung wenigstens eine erste Datenbank (68) aufweist, in der die von den Luftfahrzeugen (40) der Flotte von Luftfahrzeugen (66) auszuführenden Flüge aufgelistet sind, wenigstens eine zweite Datenbank (70), die die Abflug- und Ankunftsflughäfen der Flüge der Luftfahrzeuge (40) der Flotte von Luftfahrzeugen(66) auflistet, sowie wenigstens einen Verwalter (72), der so eingerichtet ist, dass er ausgehend von der ersten und der zweiten Datenbank (68, 70) wenigstens eine Planung (74) der Schritte zur Änderung der Konfiguration der Luftfahrzeuge (40) nach einem der Ansprüche 3 bis 5 der Flotte von Luftfahrzeugen bestimmt.

7. Verwaltungsvorrichtung wenigstens einer Flotte von Luftfahrzeugen (66) nach dem vorhergehenden Anspruch, **dadurch gekennzeichnet, dass** die erste Datenbank (68) für jeden Flug wenigstens die folgenden Merkmale auflistet: einen Abflughafen, ein Abflugdatum, einen Ankunftsflughafen, ein Ankunftsdatum sowie die Betriebsbedingungen des Flugs.

8. Verwaltungsvorrichtung wenigstens einer Flotte von Luftfahrzeugen (66) nach einem der Ansprüche 6 bis 7, **dadurch gekennzeichnet, dass** die zweite Datenbank (70) für jeden Flughafen (60.1, 60.2) auflistet, ob die Luftfahrzeuge (40) mit einer Hilfsenergieeinheit (50) ausgestattet werden müssen oder nicht.

9. Verwaltungsvorrichtung wenigstens einer Flotte von Luftfahrzeugen (66) nach einem der Ansprüche 6 bis 8, **dadurch gekennzeichnet, dass** die Verwaltungsvorrichtung wenigstens einen Operateur (76) umfasst, der so eingerichtet ist, dass er die Schritte zur Änderung der Konfiguration anhand der von dem Verwalter (72) erstellten Planung (74) durchführt.

## Claims

1. Method for managing at least one aircraft (40), said aircraft (40) comprising a fuselage (42) that has a main portion (44) and being configured to perform a first category of flights not requiring any auxiliary power unit (50) and a second category of flights requiring at least one auxiliary power unit (50), **characterized in that** the aircraft (40) is configured to alternately occupy a first configuration suitable for the first flight category, in which configuration the aircraft (40) comprises a lightened first tail cone (46), not comprising any auxiliary power unit (50), positioned aft of the main portion (44) and connected to the latter by a removable aft link (46.1) and a second configuration suitable for the second flight category, in which configuration the aircraft (40) comprises a second tail cone (46') comprising an auxiliary power unit (50), positioned aft of the main portion (44) and connected to the latter by the removable aft link (46.1) and **in that** the managing method comprises, for at least one given flight to be performed, a step of determining, from among the first and second flight categories, to which category the given flight to be performed belongs, a step of determining, from among the first and second configurations, which configuration is suitable for the flight category determined in the previous step and a step of changing the configuration of the aircraft if the configuration of the aircraft does not correspond to the configuration determined in the previous step.

2. Method for managing at least one aircraft (40) according to the preceding claim, **characterized in that** the managing method comprises a step of planning the flights to be performed by the aircraft (40), a step of determining the flight category to which each flight belongs and the configuration of the aircraft (40) for each flight, a step of determining each scheduled stopover between two successive flights having different aircraft configurations and a step of planning a step of changing the configuration of the aircraft for each stopover determined in the previous step.

3. Method for managing at least one fleet of aircraft (66) according to one of Claims 1 to 2, **characterized in that** the managing method comprises a step of determining the flights to be performed by each of the aircraft (40) of the fleet of aircraft (66), a step of determining the flight category to which each flight belongs and the configuration of the aircraft (40) for each flight determined in the previous step, a step of determining, for each aircraft (40) in the fleet of aircraft (66), stopovers where the aircraft (40) is to undergo a step of changing configuration aiming to remove or install a lightened first tail cone (46) not comprising any auxiliary power unit (50), or a second tail cone (46') comprising an auxiliary power unit (50) and a step of planning the steps of changing the configuration of the aircraft (40) of the fleet of aircraft (66) for each stopover determined in the previous step.

4. Method for managing at least one fleet of aircraft according to the preceding claim, **characterized in that** at least a first tail cone (46) is compatible with a plurality of aircraft and/or **in that** at least a second tail cone (46') is compatible with a plurality of aircraft.

5. Method for managing at least one fleet according to the preceding claim, **characterized in that** the planning step consists in predicting, for each step of changing configuration, the place and date of the step of changing configuration, the first or second tail cone (46, 46') to be installed compatible with the aircraft to be converted and the material and human resources required to carry out the step of changing configuration.

6. Device for managing at least one fleet of aircraft (66) making it possible to implement the method for managing at least one fleet of aircraft (66) according to one of claims 3 to 5, **characterized in that** the managing device comprises at least a first database (68) containing the flights to be performed by the aircraft (40) of the fleet of aircraft (66), at least a second database (70) containing the departure and arrival airports of the flights of the aircraft (40) of the fleet of aircraft (66) and at least one manager (72) configured to determine, based on the first and second databases (68, 70), at least one schedule (74) for the steps of changing configuration of the aircraft according to one of claims 3 to 5 of the fleet of aircraft.

7. Device for managing at least one fleet of aircraft (66) according to the preceding claim, **characterized in that** the first database (68) contains, for each flight, at least the following characteristics: a departure airport, a departure date, an arrival airport, an arrival date and the operating conditions of the flight.

8. Device for managing at least one fleet of aircraft (66) according to one of Claims 6 to 7, **characterized in that** the second database (70) contains, for each airport (60.1, 60.2), whether the aircraft (40) must be equipped with an auxiliary power unit (50) or not.

9. Device for managing at least one fleet of aircraft (66) according to one of Claims 6 to 8, **characterized in that** the managing device comprises at least one operator (76) configured to carry out the steps of changing configuration on the basis of the schedule (74) established by the manager (72).
